# EUROPEAN PATENT SPECIFICATION

(11) **EP 3 479 525 B1**
(45) Date of publication and mention of the grant of the patent: **02.07.2025**
(21) Application number: 17731016.6
(22) Date of filing: 05.06.2017
(51) Int. Cl.: H04L 41/069

(54) **PREDICTING PROBLEM EVENTS FROM MACHINE DATA**
VORHERSAGE VON PROBLEMEREIGNISSEN AUS MASCHINENDATEN
PRÉDICTION D'ÉVÉNEMENTS DE PROBLÈME À PARTIR DE DONNÉES MACHINE

(30) Priority: 29.06.2016 US 201615196264
(43) Date of publication of application: 08.05.2019
(73) Proprietor: Nokia of America Corporation, Murray Hill, NJ 07974-0636 (US)
(72) Inventor: AKYAMAC, Ahmet, Murray Hill NJ 07974-0636 (US); UZUNALIOGLU, Huseyin, Murray Hill NJ 07974-0636 (US)
(74) Representative: DREISS Patentanwälte PartG mbB
(86) International application number: PCT/US2017/035872
(87) International publication number: WO 2018/005012

(56) References cited:
- EP-A1- 2 375 637
- WO-A1-2016/018382
- US-A1- 2008 126 881
- US-A1- 2015 052 243

## Description

### TECHNICAL FIELD

The present disclosure relates generally to the field of communication networks and, more particularly but not exclusively, to prediction of problem events associated with delivery of services via communication networks.

### BACKGROUND

Various types of services may be delivered using various types of communication networks. For example, services such as voice and data services may be delivered via communication networks such as Internet Protocol based communication networks. In many cases, problems associated with the services or the communication networks used to deliver the services may be detected by network and service providers, reported to network and service providers, or the like. Disadvantageously, however, such problems typically are only identified after they have occurred and, therefore, any response to such problems are merely reactive. EP 2 375 637 A1 discloses network routing adaptation based on failure prediction. WO 2016/018382 discloses creating a security report for a customer network.

### SUMMARY

The present disclosure generally discloses a problem event prediction capability for predicting problem events.

In at least some embodiments, an apparatus according to claim 1 is provided.. Claim 11 relates to a corresponding method.

### BRIEF DESCRIPTION OF THE DRAWINGS

The teachings herein can be readily understood by considering the following detailed description in conjunction with the accompanying drawings, in which:

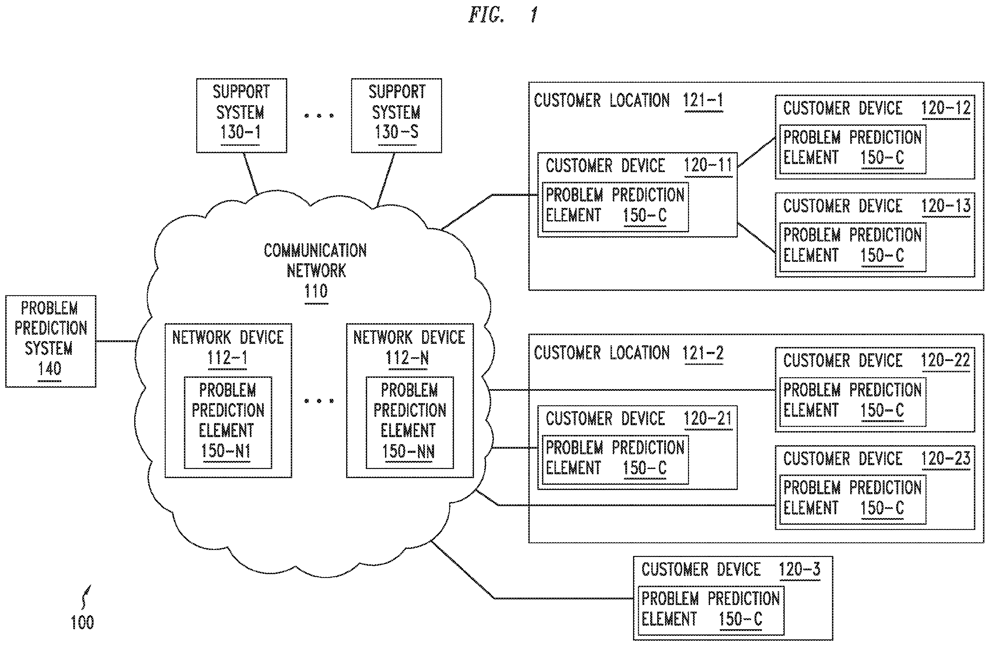

FIG. 1 depicts an exemplary communication system configured to support prediction of problem events;

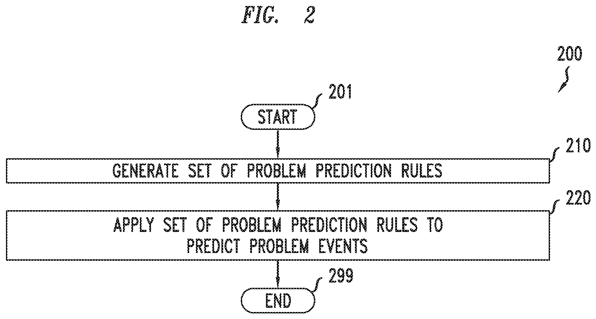

FIG. 2 depicts one embodiment of a method for supporting prediction of problem events by creation of problem prediction rules and application of problem prediction rules;

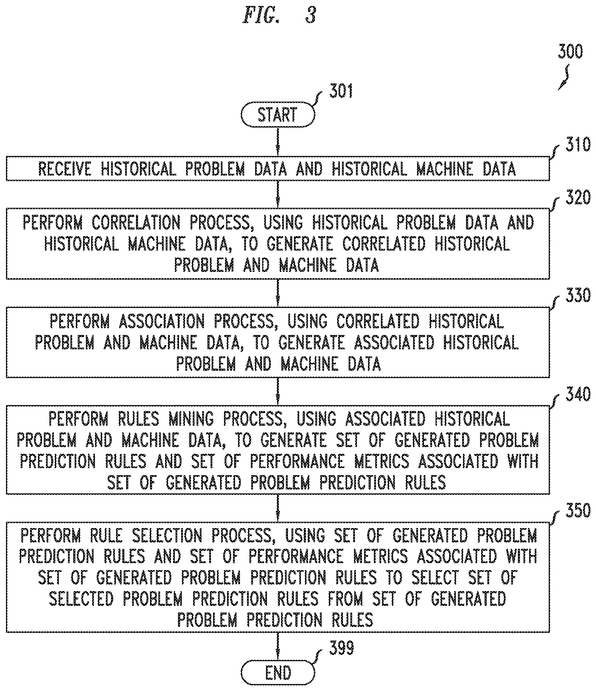

FIG. 3 depicts one embodiment of a method for generating a set of problem prediction rules configured for use in predicting problem events;

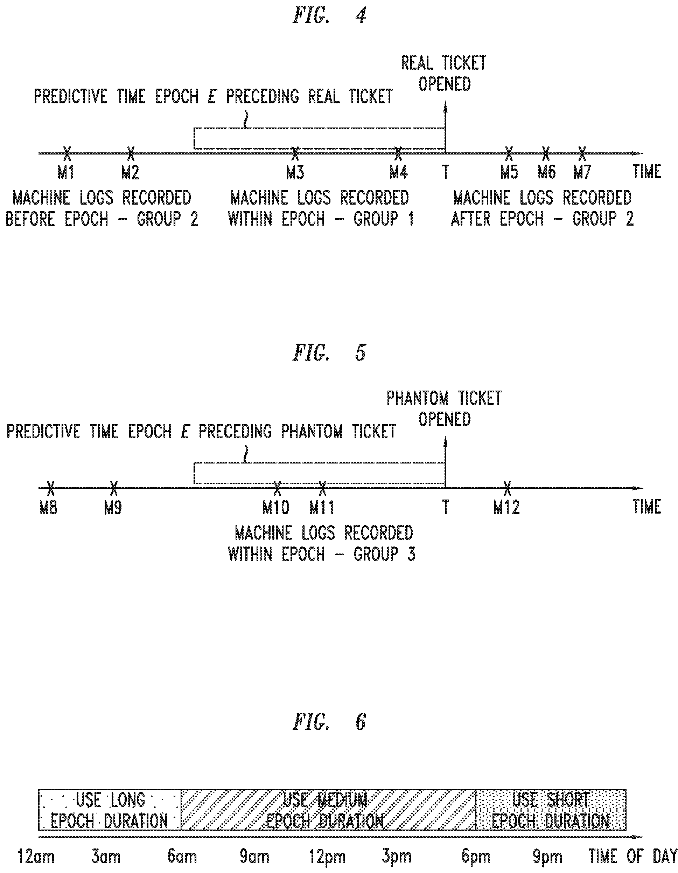

FIG. 4 depicts a first aspect of a first embodiment of an association process, for associating historical problem data and historical machine data, in which the historical machine data is associated to the historical problem data based on a predictive time epoch preceding a time at which the historical problem data was reported;
FIG. 5 depicts a second aspect of a first embodiment of an association process, for associating historical problem data and historical machine data, in which phantom problem data is generated as the historical problem data and the historical machine data is associated to the phantom problem data based on a predictive time epoch preceding a time at which the phantom problem data is estimated to have occurred;
FIG. 6 depicts a second embodiment of an association process, for associating historical problem data and historical machine data, in which the historical machine data is associated to the historical problem data based on a predictive time epoch preceding a time at which the historical problem data was reported and where the predictive time epoch is variable and variability is based on known characteristics of the network or the service;

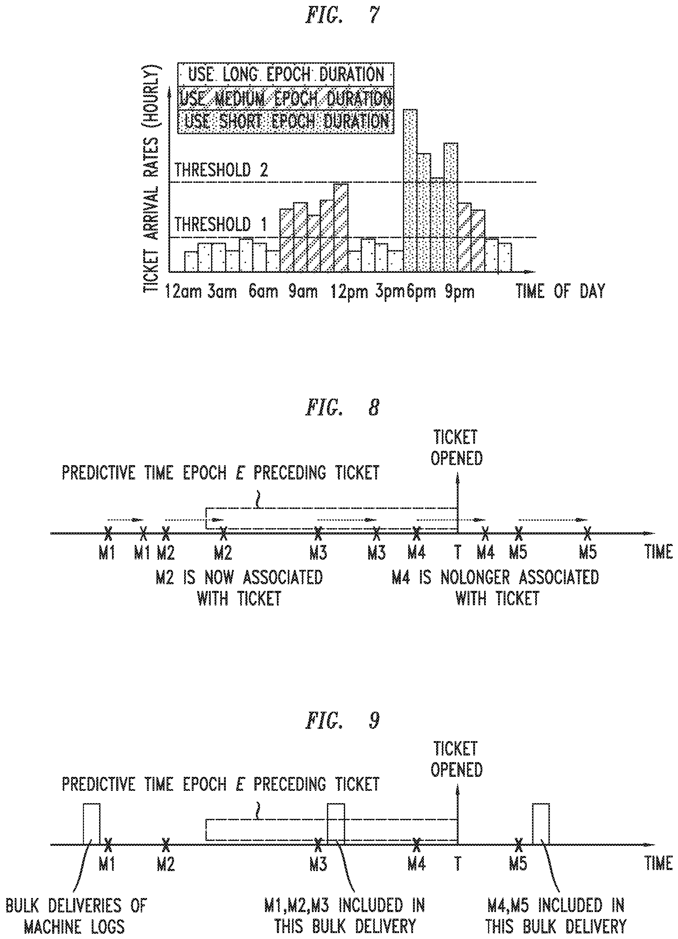

FIG. 7 depicts a third embodiment of an association process, for associating historical problem data and historical machine data, in which the historical machine data is associated to the historical problem data based on a predictive time epoch preceding a time at which the historical problem data was reported and where the predictive time epoch is variable and variability is based on thresholds of the machine data arrival rate;
FIG. 8 depicts a first aspect of a fourth embodiment of an association process, for associating historical problem data and historical machine data, in which the historical machine data is associated to the historical problem data based on a predictive time epoch preceding a time at which the historical problem data was reported and where the machine data creation times are modulated to represent delay in delivery of machine data;
FIG. 9 depicts a second aspect of a fourth embodiment of an association process, for associating historical problem data and historical machine data, in which the historical machine data is associated to the historical problem data based on a predictive time epoch preceding a time at which the historical problem data was reported and where the machine data creation times are modulated to represent bulk delivery of machine data;

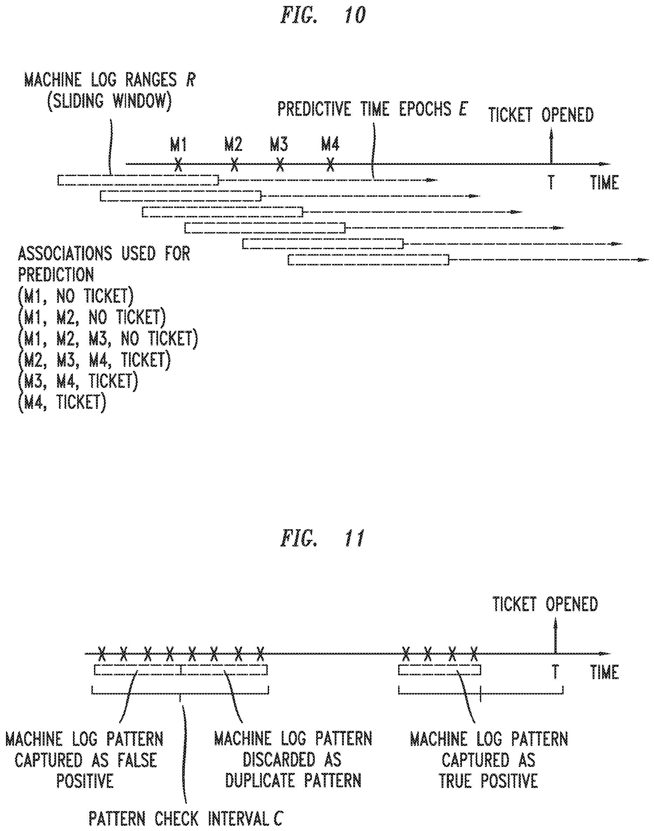

FIG. 10 depicts a fifth embodiment of an association process, for associating historical problem data and historical machine data, in which the historical machine data is associated to the historical problem data based on a two-level temporal hierarchy for grouping machine data in which the two-level temporal hierarchy is advanced as a sliding time window;
FIG. 11 depicts a sixth embodiment of an association process, for associating historical problem data and historical machine data, in which the historical machine data is associated to the historical problem data based on a two-level temporal hierarchy for grouping machine data in which the two-level temporal hierarchy is advanced as a sliding time window and where a pattern check interval is applied for post-processing in order to reduce the number of duplicated patterns;

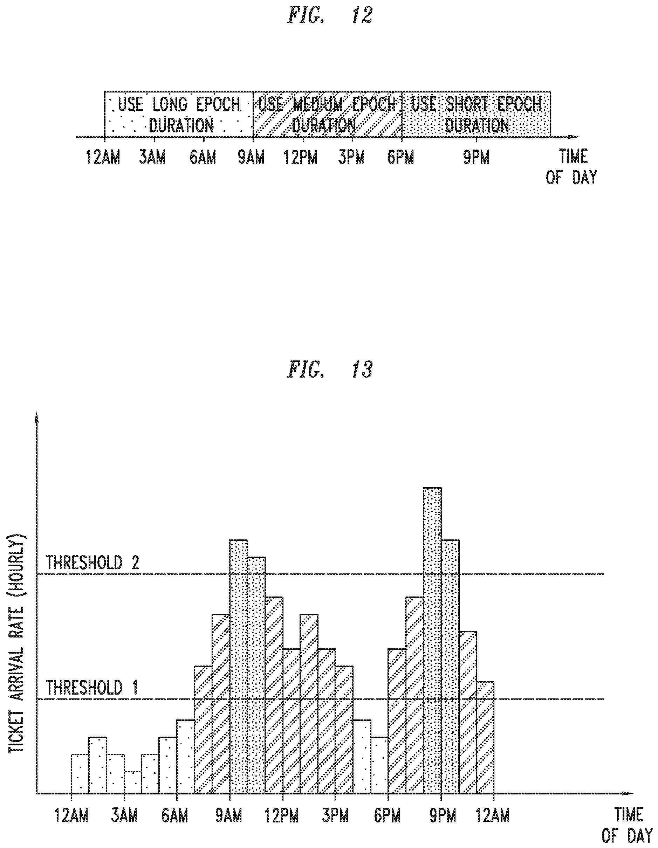

FIG. 12 depicts a seventh embodiment of an association process, for associating historical problem data and historical machine data, in which the historical machine data is associated to the historical problem data based on a two-level temporal hierarchy for grouping machine data and where the predictive time epoch of the two-level temporal hierarchy is variable and variability is based on known characteristics of the network or the service;
FIG. 13 depicts an eighth embodiment of an association process, for associating historical problem data and historical machine data, in which the historical machine data is associated to the historical problem data based on a two-level temporal hierarchy for grouping machine data where the predictive time epoch two-level temporal hierarchy is variable and variability is based on thresholds of the machine data arrival rate;

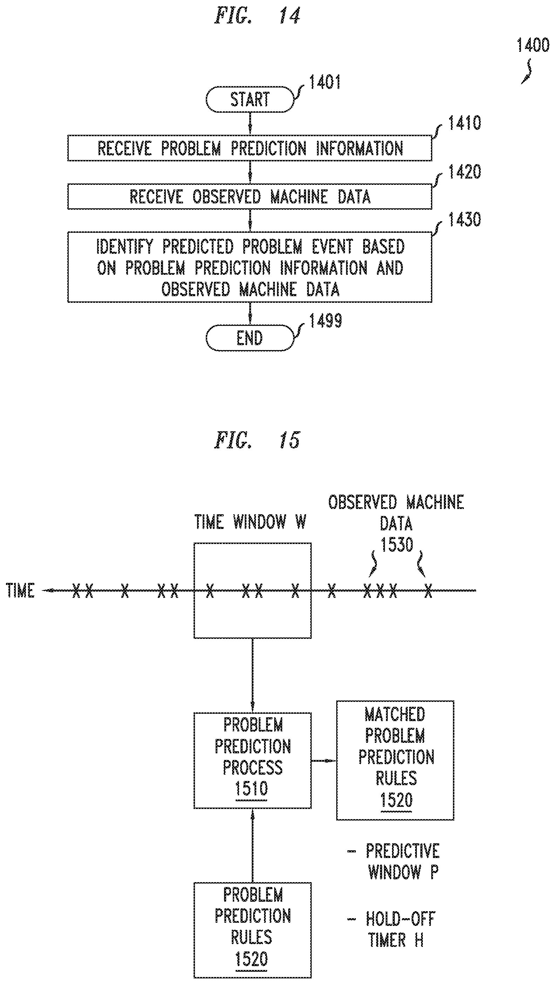

FIG. 14 depicts one embodiment of a method for applying a set of problem prediction rules to predict problem events;
FIG. 15 depicts one embodiment of application of a problem prediction process to identify a predicted problem event based on observed machine data and problem prediction rules; and

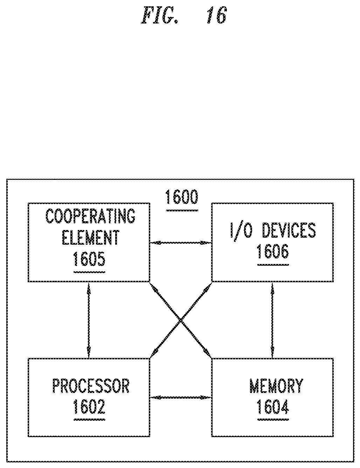

FIG. 16 depicts a high-level block diagram of a computer suitable for use in performing various functions described herein.

To facilitate understanding, identical reference numerals have been used, where possible, to designate identical elements that are common to the figures.

### DETAILED DESCRIPTION

The present disclosure generally discloses a problem event prediction capability. The problem event prediction capability may be configured to predict various types of problem events (e.g., customer problems, customer tickets, customer outages, network problems, network tickets, network outages, or the like, as well as various combinations thereof) based on various types of asynchronous machine data (e.g., alarms, alerts, triggers, machine logs, machine messages, diagnostic logs, diagnostic messages, or the like, as well as various combinations thereof). The problem event prediction capability may be configured to generate a set of problem prediction rules based on historical machine data and to apply the problem prediction rules to observed machine data in order to predict various types of problem events. These and various other embodiments and potential advantages of the problem event prediction capability may be further understood by way of reference to the exemplary communication system of FIG. 1.

FIG. 1 depicts an exemplary communication system configured to support prediction of problem events.

The communication system 100 includes a communication network (CN) 110, a set of customer devices (CDs) 120, a set of support systems (SSs) 130-1 - 130-S (collectively, SSs 130), and a problem prediction system (PPS) 140 and an associated set of problem prediction elements (PPEs) 150.

The CN 110 is configured to support various types of communications within communication system 100. The CN 110 may be configured to support delivery of various services (e.g., voice services, cable television services, Internet services, data services, networking services, or the like, as well as various combinations thereof) to CDs 120. The CN 110 may be configured to support various communications between SSs 130 and CDs 120 in order to enable the SSs 130 to provide various support functions for CDs 120 (e.g., service provisioning functions, customer care functions, or the like, as well as various combinations thereof). The CN 110 may be configured to support various communications of PPS 140 to support prediction of problem events (e.g., for devices of CN 110, for CDs 120, or the like, as well as various combinations thereof) and related functions (e.g., actions initiated responsive to predicted problem events and so forth). The CN 110 may be implemented in various ways, which may depend on the types of services supported, the customer device types of the CDs 120, the support system types of the SSs 130, or the like, as well as various combinations thereof.

The CN 110, as depicted in FIG. 1, includes various network devices (NDs) 112-1 - 112-N (collectively, NDs 112). The devices types of NDs 112 may vary for different types of communication networks. For example, NDs 112 may include network elements, forwarding elements, control elements, or the like, as well as various combinations thereof. For example, NDs 112 may include bridges, switches, routers, wireless access devices (e.g., evolved NodeBs (eNodeBs) in Long Term Evolution (LTE)), LTE Serving Gateways (SGWs), LTE Packet Data Network (PDN) Gateways (PGWs), LTE Mobility Management Entities (MMEs), or the like. The CN 110 may support various other types of communications using various other types of devices.

The NDs 112-1 - 112-N include PPEs 150-N1 - 150-NN (collectively, PPEs 150-N), respectively, which are configured to support various problem prediction functions for predicting problem events within the communication system 100. It will be appreciated that different NDs 112 may include PPEs 150-N configured in different ways (e.g., supporting different problem prediction features).

The CDs 120 include customer devices configured to support or receive various services via CN 110. As noted above, such services may include voice services, cable services, Internet services, data services, networking services, or the like, as well as various combinations thereof.

The CDs 120 may include various types of devices. For example, the CDs 120 may include customer end devices (e.g., set-top boxes, televisions, desktop computers, laptop computers, tablet computers, gaming systems, smartphones, smart appliances, Internet-of-Things (IoT) devices, or the like, as well as various combinations thereof), customer network devices (e.g., gateways, routers, switches, bridges, modems, or the like), or the like.

The CDs 120 may be arranged in various ways. For example, CDs 120 may be associated with customer locations or CDs 120 may not necessarily be associated with customer locations. It will be appreciated that such customer locations may include residential customer locations of residential customers, business customer locations of business customers, enterprise customer locations of enterprise customers, or the like, as well as various combinations thereof. For example, CDs 120 may communicate with CN 110 indirectly (e.g., via a customer network device, such as a gateway or other customer network device) or may communicate with CN 110 directly (e.g., a cellular-enabled smartphone or tablet that does not have to rely on a customer gateway in order to communicate with CN 110). It is noted that at least some such arrangements of CDs 120 are depicted in FIG. 1, as discussed further below.

The CDs 120, as noted above, may be arranged in various ways. For example, a customer location 121-1 illustrates an arrangement in which a customer gateway device at customer location 121-1 (illustratively, CD 120-11) operates as a gateway supporting a set of customer end devices (illustratively, CDs 120-12 and 120-13) at the customer location 121-1. For example, a customer location 121-2 illustrates an arrangement in which a set of customer end devices (illustratively, CDs 120-21, 120-22, and 120-23) communicate via CN 110 independent of any customer gateway device at customer location 121-2. For example, CD 120-3 illustrates a customer end device that communicates via CN 110 and which is independent of any associated customer location. It will be appreciated that, while the CDs 120 depicted in FIG. 1 represent certain arrangements of CDs 120, various other arrangements or deployments of CDs 120 may be used. It will be appreciated that, although a specific number of CDs 120 are illustrated, various other numbers of CDs 120 may be present.

The CDs 120 include PPEs 150-C (illustratively, each CD 120 includes a PPE 150-C, respectively), which are configured to support various problem prediction functions for predicting problem events within the communication system 100. It will be appreciated that, although primarily presented with respect to embodiments in which each CD 120 includes a respective PPE 150-C, only a subset of CDs 120 may include PPEs 150-C. It will be appreciated that different CDs 120 may include PPEs 150-C configured in different ways (e.g., supporting different problem prediction features).

The SSs 130 include various support systems which may provide various types of support system functions. The SSs 130 may be configured to provide support system functions for CN 110, CDs 120, or the like. For example, the SSs 130 may include operations support systems (OSSs), business services systems (BSSs), or the like. For example, the SSs 130 may include element management systems (EMSs), network management systems (NMSs), or the like. For example, the SSs 130 may include network provisioning systems or systems supporting network provisioning functions, service provisioning systems or systems supporting service provisioning functions, fault monitoring systems or systems supporting fault monitoring functions, fault management systems or systems supporting fault management functions, customer care systems or systems supporting customer care functions, proactive customer care systems or systems supporting proactive customer care functions, or the like, as well as various combinations thereof. The SSs 130 may be configured to provide various other support functions for CN 110, CDs 120, or the like.

The PPS 140 and PPEs 150 are configured to cooperate to support prediction of problem events within communication system 100. The PPS 140 and PPEs 150 are configured to cooperate to support prediction of problem events for CN 110 (illustratively, for NDs 112) and CDs 120.

The PPS 140 and PPEs 150 are configured to cooperate to support generation of a set of problem prediction rules configured for use in predicting problem events within communication system 100. The PPS 140 may be configured to generate a set of problem prediction rules based on historical problem event data received from SSs 130 and based on historical machine data received from PPEs 150. The set of problem prediction rules may include one or more problem prediction rules generated based on historical machine data from PPEs 150-N on NDs 112 of CN 110 and configured for use in predicting problem events associated with CN 110, one or more problem prediction rules generated based on historical machine data from PPEs 150-C on CDs 120 and configured for use in predicting problem events associated with CDs 120, one or more problem prediction rules generated based on historical machine data from PPEs 150-N on NDs 112 of CN 110 and based on historical machine data from PPEs 150-C on CDs 120 and configured for use in predicting problem events associated with CN 110 or CDs 120, or the like, as well as various combinations thereof.

The PPS 140 and PPEs 150 are configured to cooperate to support prediction of problem events within communication system 100.

The PPS 140 and PPEs 150 may be configured to cooperate to support centralized prediction of problem events within communication system 100. The centralized prediction of problem events within communication system 100 may be performed by PPS 140 based on the set of problem prediction rules generated by PPS 140. The PPS 140 may be configured to perform problem prediction locally at the PPS 140 by receiving machine data from PPEs 150 within the communication system 100 (e.g., PPEs 150-N on the NDs 112 of CN 110, PPEs 150-C on CDs 120, or the like), comparing the received machine data to the problem prediction rules to determine whether the received machine data matches any of the problem prediction rules, and identifying a predicted problem event based on a determination that the received machine data matches one of the problem prediction rules.

The PPS 140 and PPEs 150 may be configured to cooperate to support distributed prediction of problem events within communication system 100. The distributed prediction of problem events within communication system 100 may be performed by the PPEs 150 based on sets of predicted rules received by the PPEs 150 from PPS 140. It will be appreciated that PPS 140 may provide the same set of problem prediction rules each PPE 150 or that PPS 140 may provide different sets of problem prediction rules to different PPEs 150. A PPE 150 may be configured to perform problem prediction locally at the PPE 150 by receiving a set of problem prediction rules from PPS 140, observing machine data at the device on which the PPE 150 is running (and, optionally, from one or more other devices), comparing the observed machine data to the problem prediction rules to determine whether the observed machine data matches any of the problem prediction rules, and identifying a predicted problem event based on a determination that the observed machine data matches one of the problem prediction rules.

The PPS 140 and PPEs 150 may be configured to cooperate to provide various other problem prediction functions in order support prediction of problem events within communication system 100.

It will be appreciated that the communication system 100 of FIG. 1 may be implemented in various other ways in order support prediction of problem events within communication system 100.

FIG. 2 depicts one embodiment of a method for supporting prediction of problem events by creation of problem prediction rules and application of problem prediction rules. It will be appreciated that, although primarily presented as being performed serially, at least a portion of the functions of method 200 may be performed contemporaneously or in a different order than as presented in FIG. 2.

At block 201, method 200 begins.

At block 210, a set of problem prediction rules is generated for use in predicting problem events. The set of problem prediction rules is generated based on historical problem data and historical machine data. The set of problem prediction rules is configured for use in predicting problem events based on observed machine data. The set of problem prediction rules may be generated by a centralized problem prediction system (e.g., PPS 140 of FIG. 1). An exemplary embodiment of a method for generating a set of problem prediction rules is presented with respect to FIG. 3.

At block 220, the set of problem prediction rules is applied for predicting problem events. The set of problem prediction rules is applied for predicting problem events based on observed machine data. The set of problem prediction rules may be applied by a centralized problem prediction system (e.g., PPS 140 of FIG. 1), by problem prediction elements running on network devices (e.g., PPEs 150-N) or customer devices (e.g., PPEs 150-C), or the like, as well as various combinations thereof. An exemplary embodiment of a method for applying a set of problem prediction rules is presented with respect to FIG. 14.

At block 299, method 200 ends.

FIG. 3 depicts one embodiment of a method for generating a set of problem prediction rules configured for use in predicting problem events. The method 300 of FIG. 3 may be used to provide block 210 of FIG. 2. It will be appreciated that, although primarily presented as being performed serially, at least a portion of the functions of method 300 may be performed contemporaneously or in a different order than as presented in FIG. 3.

At block 301, method 300 begins.

At block 310, historical problem data and historical machine data are received.

The historical problem data may include historical network problem data, historical customer problem the historical problem information and the historical machine data, or the like, as well as various combinations thereof.

The historical network problem data may include reported network problems, reported network outages, network problems, network outages, network tickets, or the like, as well as various combinations thereof. The historical network problem data may be received from support systems providing network support functions for the network (e.g., SSs 130 of FIG. 1), network devices of the network (e.g., NDs 112 of FIG. 1), or the like, as well as various combinations thereof.

The historical customer problem data may include reported customer problems, reported customer outages, customer problems, customer outages, customer tickets, or the like, as well as various combinations thereof. The historical customer problem data may be received from support systems providing customer support functions for the network (e.g., SSs 130 of FIG. 1), customer devices (e.g., CDs 120 of FIG. 1), or the like, as well as various combinations thereof.

The historical problem data may include, for a given problem, a tag or label for the problem, a description of the problem, a timestamp or other temporal data for the problem (e.g., a time at which a network problem or outage was reported, a time at which a network problem or outage was detected, a time at which a network ticket was created, or the like), or the like, as well as various combinations thereof.

The historical machine data may include historical network machine data, historical customer machine data, or the like, as well as various combinations thereof.

The historical network machine data may include various types of machine data which may be collected from network devices within the communication network (e.g., NDs 112 of FIG. 1). For example, the historical network machine data may include alarms, alerts, triggers, machine logs, machine messages, diagnostic logs, diagnostic messages, or the like, as well as various combinations thereof.

The historical customer machine data may include various types of machine data which may be collected from customer devices (e.g., CDs 120 of FIG. 1 or other suitable customer devices). For example, the historical customer machine data may include alarms, alerts, triggers, machine logs, machine messages, diagnostic logs, diagnostic messages, or the like, as well as various combinations thereof.

The historical machine data may include, for a given instance of machine data, a tag or label for the machine data, a unique signature for the machine data, a timestamp or other temporal data for the machine data, or the like, as well as various combinations thereof.

It will be appreciated that various other types of historical problem data or historical machine data may be received.

At block 320, a correlation process is performed, using the historical problem data and the historical machine data, to generate correlated historical problem and machine data. The correlation of the historical problem information and historical machine data to provide the correlated historical problem and machine data may include merging the historical problem information and historical machine data such that historical problem data corresponding to a particular network segment (e.g., network device, group of network devices, or the like) is matched to the historical machine data associated with that network segment, such that historical problem data corresponding to a particular customer segment (e.g., customer device, customer location, group of customer locations, or the like) is matched to the historical machine data associated with that customer segment, or the like, as well as various combinations thereof.

At block 330, an association process is performed, using the correlated historical problem and machine data, to generate associated historical problem and machine data. The association of the correlated historical problem information and historical machine data to provide the associated historical problem and machine data may include creating temporal associations between the historical problem data and the historical machine data. The temporal associations between the historical problem data and the historical machine data may indicate for particular historical problem data, particular historical machine data which preceded the historical problem data (e.g., such that observance of that machine data may indicate a potential prediction of the problem that is indicated by that problem data). It will be appreciated that, for various reasons, problem data and machine data that are associated with each other may be significantly decoupled from each other in a temporal or spatial sense. For example, network problems are typically reported by network monitoring systems and the reporting times can vary greatly due to the monitoring processes in use, customer problems are typically recorded at customer care centers and the reporting times can vary greatly due to customer behavior, the delivery of machine data may be constrained in various ways (e.g., by limits on data collection activities in the network or the like), and so forth. As discussed further below with respect to FIG. 4 - FIG. 13, the association process may be configured to use various embodiments to handle the decoupled nature of the historical problem data and the historical machine data. It will be appreciated that, while these various embodiments are primarily presented within the context of specific types of problem data (namely, tickets) and specific types of machine data (namely, logs), the various embodiments may be used to create temporal associations between various other types of problem data and various other types of machine data.

At block 340, a rules mining process is performed, using associated historical problem and machine data, to generate a set of generated problem prediction rules and a set of performance metrics associated with the set of generated problem prediction rules.

The rules mining process is configured to analyze the associated historical problem and machine data to generate the set of generated problem prediction rules. In general, a problem prediction rule may be identified and generated based on identification of a pattern in the associated historical problem and machine data (e.g., a particular set machine data typically precedes an associated problem event). In general, a problem prediction rule may be in the form of (Machine Data *1*, Machine Data *2*,..., Machine Data *n* → Problem Type *T*), with the "→" symbol indicating a prediction of a certain problem type based on the indicated set (or pattern) of machine data.

The rules mining process is configured to analyze the associated historical problem and machine data and the set of generated problem prediction rules in order to generate the set of performance metrics associated with the set of generated problem prediction rules. The set of performance metrics may be configured for use in determining which of the generated problem prediction rules are selected as the problem prediction rules to be applied for predicting problem events. The performance metrics may include a coverage metric (e.g., the number of explained associations), a confidence metric (e.g., a ratio of positively explained associations), a lift metric (e.g., an indication of the improvement of predictive power to random choice), or the like, as well as various combinations thereof.

The rules mining process may be implemented as a standard rules extraction process using data analytics. In at least some embodiments, for example, the rules mining process may be a Market Based Analysis process.

At block 350, a rule selection process is performed, using the set of generated problem prediction rules and the set of performance metrics associated with the set of generated problem prediction rules, to select a set of selected problem prediction rules from the set of generated problem prediction rules. The set of selected problem prediction rules may be selected from the set of generated problem prediction rules based on the set of performance metrics. The set of selected problem prediction rules may include all of the generated problem prediction rules or a subset of the generated problem prediction rules. The selected problem prediction rules may then be deployed and applied for use in predicting problem events based on observed machine data. It is noted that, although primarily presented with respect to embodiments in which the set of selected problem prediction rules is selected from the set of generated problem prediction rules based on the set of performance metrics, the set of selected problem prediction rules may be selected from the set of generated problem prediction rules based on other selection criteria which may be used in combination with or in place of the set of performance metrics (e.g., the cost associated with the application of each prediction rule, a measure of the applicability of the prediction rule based on domain knowledge and other known information about the system, or the like, as well as various combinations thereof).

At block 399, method 300 ends.

It will be appreciated that, although primarily presented with respect to embodiments in which a subset of the problem prediction rules are selected from the generated set of problem prediction rules based on performance metrics to provide the set of problem prediction rules that are applied for predicting problems, in at least some embodiments the generated set of problem prediction rules may be used as the set of problem prediction rules that are applied for predicting problem.

As discussed herein, an association process is performed, using correlated historical problem and machine data, to generate associated historical problem and machine data. The association of the correlated historical problem information and historical machine data to provide the associated historical problem and machine data may include creating temporal associations between the historical problem data and the historical machine data. As discussed above, the historical problem data and historical machine data that is correlated to provide the correlated historical problem and machine data may still be temporally decoupled such that it may be difficult to establish predictive relationships between the historical problem data and the historical machine data. As discussed above, the association process may be configured to use various embodiments (referred to below as a first embodiment through an eighth embodiment) to handle the decoupled nature of the historical problem data and the historical machine data. In general, the first, second, third, and fourth embodiments may be considered to be "look-back" embodiments (e.g., looking back in time from a reference problem event in historical problem data), whereas the fifth, sixth, seventh, and eighth embodiments may be considered to be look-ahead embodiments (e.g., looking ahead in time toward a reference problem event in historical problem data). It will be appreciated that, while these various embodiments are primarily presented within the context of specific types of problem data (namely, tickets) and specific types of machine data (namely, logs), the various embodiments may be used to create temporal associations between various other types of problem data and various other types of machine data. It will be appreciated that, while these various embodiments are primarily presented individually, various combinations of these embodiments may be used.

In a first embodiment of the association process, machine logs are temporally associated to a ticket by generating a look-back time window, or predictive time epoch (E), preceding a ticket creation time of the ticket. Machine logs generated in this predictive time epoch E are associated to the ticket based on the time they were generated in order to be used as predictors of the ticket. It is noted that this may be considered to be a ticket-centric approach. This approach is illustrated in FIG. 4 (a first aspect of the first embodiment in which a real ticket exists) and FIG. 5 (a second aspect of the first embodiment in which a real ticket does not exist, but, rather, a phantom ticket is created in place of the real ticket in order to determine the association).

In the first embodiment, the ticket time is not required to correspond to the actual time of the occurrence of the failure(s) and/or outage(s), and the predictive time epoch *E* is not required to coincide with the system or service being in a failure state. More specifically, the length of the predictive time epoch *E* may correspond to different customer situations. For example, an *E*=1-hour predictive time epoch can correspond to a customer promptly observing a problem and calling in. By contrast, for example, an *E*=48-hour predictive time epoch can correspond to a customer that was away for a weekend and called in after returning and noticing the problem. It will be appreciated that shorter lengths of predictive time epoch *E* may miss some machine logs corresponding to the problem, and longer lengths of predictive time epoch *E* may include transient machine logs that are unrelated to the ticket. An exploration of various lengths of predictive time epoch *E* may be undertaken for rule selection.

In the first embodiment, the association algorithm produces a balanced set of associations for rules mining. There are three groups of associations between tickets and machine logs as follows:
Group 1: Tickets with machine logs triggered in the predictive time epoch *E*. In FIG. 4, this group is illustrated by the machine logs inside the predictive time epoch *E*. This group represents the true positives of the rules. An example association for this group is (M3, M4, T).

Group 2: Tickets with no machine logs triggered or with machine logs triggered outside the predictive time epoch *E*. In FIG. 4, this group is illustrated by the machine logs outside the predictive time epoch *E*. This group represents the true negatives of the rules, as these tickets cannot be predicted by machine logs. An example association for this group is (No Logs, T).

Group 3: Triggered machine logs with no corresponding ticket. In this embodiment, this group is generated by creating a phantom ticket in lieu of a non-existent ticket. The purpose of the phantom ticket is to identify machine log patterns occurring within a predictive time epoch *E* that did not result in a ticket being opened, essentially anchoring the position of the predictive time epoch *E* when no reference ticket creation time is available. Due to the lack of this reference, the ticket creation time for the phantom ticket may be determined based on the minimum and maximum observed ticket creation times in the historical problem data set (e.g., randomly drawn based on the historical distribution of ticket creation times in the time period defined by the minimum and maximum observed ticket creation times in the historical problem data set). A predictive time epoch *E* is generated preceding the phantom ticket, and the machine logs within that time window are selected. This process is illustrated in FIG. 5. This group represents the false positives of the rules. An example association for this group is (M10, M11, No Ticket).

In a second embodiment of the association process, the same or similar association techniques as in the first embodiment are used. However, the length of predictive time epoch *E* is variable, not fixed, and the variability of the length of predictive time epoch *E* is defined prior to the invocation of the association process based on known characteristics of the network or service. This variability may reflect, for example, the propensity of a customer to call during different times of the day. For example, the length of predictive time epoch *E* may be set longer during overnight hours, medium during work hours, and shorter during prime-time hours. An example of this type of assignment of variable lengths to predictive time epoch *E* is shown in FIG. 6. The variability of the length of predictive time epoch *E* may be defined in various other ways. It will be appreciated that the variable length of the predictive time epoch *E* can remove the need for studying multiple epoch lengths for best rule performance.

In a third embodiment of the association process, the same or similar association techniques as in the first embodiment are used. However, the length of predictive time epoch *E* is variable, not fixed, and the variability of the length of predictive time epoch *E* is defined based on thresholds of the ticket arrival rate. The ticket arrival rates (for example, per hour of day) are calculated in the data set and one or more thresholds of the arrival rate are established. A separate predictive time epoch *E* may be set for each threshold of ticket arrival rate, where shorter epoch lengths are used for higher thresholds and longer epoch lengths are used for lower thresholds, as illustrated in FIG. 7. For example, higher ticket arrival rates may reflect, for example, multiple customers noticing the service outage quickly, thus prompting the shorter epoch lengths. Similarly, for example, lower ticket arrival rates may reflect, for example, customers noticing the service outage late, thus prompting the longer epoch lengths. It will be appreciated that the variable time epoch length can remove the need for studying multiple epoch lengths for best rule performance.

In a fourth embodiment of the association process, the same association techniques as in the first embodiment are used. However, the machine log creation times are modulated to model the potential operational aspects of collecting machine logs. It is noted that multiple types of modulation may be employed. In at least some embodiments, the first type of modulation represents a delay in the delivery of the message logs, and fixed or random delays may be added to the machine log generation times prior to association with tickets. The delayed machine logs associated with this first type of modulation are illustrated in FIG. 8. The second type of modulation represents the bulk delivery of message logs, whereby multiple machine logs are collected and delivered in bulk at periodic intervals, or periodic intervals with randomly added delays. The bulk delivery of machine logs associated with this second type of modulation is illustrated in in FIG. 9. It will be appreciated that modulation of machine log creation times may enable the predictions generated by the association process to better model operational aspects.

In a fifth embodiment of the association process, a two-level temporal hierarchy is used. The first level of hierarchy groups the machine logs by those occurring within a time range referred to as the machine log range *R*. The second level of hierarchy uses a predictive time epoch *E*, which is a length of time following the group of logs, to attempt to associate this group of logs with an eventually opened ticket. The two-level time hierarchy is then advanced as a sliding time window, starting from the earliest recorded log time to the ticket creation time, and an association is recorded for each window. This process is illustrated in FIG. 10. If a ticket has been opened within the length of time of the predictive epoch time *E* of the group of logs, the case is considered a true positive. If no ticket has been opened within the length of time of the predictive epoch time *E* of the group of logs, the case is considered a false positive. If a ticket has no machine logs associated with it, the case is considered a true negative. In this manner, a balanced set is automatically created. The association sets generated using the sliding window also are illustrated in FIG. 10. As in the first embodiment, the time length of the predictive time epoch *E* can correspond to different customer situations. For example, an *E*=1-hour epoch can correspond to a customer promptly observing a problem and calling in. By contrast, for example, an *E*=48-hour epoch can correspond to a customer that was away for a weekend and called in after returning and noticing the problem. It is noted that shorter epoch lengths of the predictive time epoch *E* may miss some machine logs corresponding to the problem, and longer epoch lengths may include transient machine logs that are unrelated to the ticket. An exploration of various epoch lengths of the predictive time epoch *E* may be undertaken for rule selection. The machine log range *R* for the machine logs can be chosen based on how frequently duplicate logs are generated. An exploration of various machine log ranges also may be undertaken for rule selection.

In a sixth embodiment of the association process, the same or similar association techniques as in the fifth embodiment are used. However, a pattern check interval *C* is used as a post-processing step following the application of the two-level sliding window in order to reduce the number of duplicated patterns (which may be duplicated "true positive" patterns or duplicated "false positive" patterns). This process is illustrated in FIG. 11 (detection of a false positive pattern is illustrated). The pattern check interval captures multiple distinct instances of repeated machine data patterns that occur during the same time interval *C* and discards duplicate patterns. Similar to the two-level time hierarchy, the pattern check interval also may be advanced as a sliding window. The time length of the pattern check interval *C* can be chosen based on how frequently duplicate machine logs are generated.

In a seventh embodiment of the association process, the same or similar association techniques as in the fifth or sixth embodiments are used. However, the length of the second level predictive time epoch *E* is variable, not fixed, and the variability of the length of predictive time epoch *E* is defined prior to the invocation of the association process based on known characteristics of the network or service. This variability may reflect, for example, the propensity of a customer to call during different times of the day. For example, the length of predictive time epoch *E* may be set longer during overnight hours, medium during work hours, and shorter during prime-time hours. An example of this type of assignment of variable lengths to predictive time epoch *E* is shown in FIG. 12. The variability of the length of predictive time epoch *E* may be defined in various other ways. It will be appreciated that the variable length of the predictive time epoch *E* can remove the need for studying multiple epoch lengths for best rule performance.

In an eighth embodiment of the association process, the same or similar association techniques as in the fifth or sixth embodiments are used. However, the length of the second level predictive time epoch *E* is variable, not fixed, and the variability of the length of predictive time epoch *E* is defined based on thresholds of the ticket arrival rate. The ticket arrival rates (for example, per hour of day) are calculated in the data set and one or more thresholds of the arrival rate are established. A separate predictive time epoch *E* may be set for each threshold of ticket arrival rate, where shorter epoch lengths are used for higher thresholds and longer epoch lengths are used for lower thresholds, as illustrated in FIG. 13. For example, higher ticket arrival rates may reflect, for example, multiple customers noticing the service outage quickly, thus prompting the shorter epoch lengths. Similarly, for example, lower ticket arrival rates may reflect, for example, customers noticing the service outage late, thus prompting the longer epoch lengths. It will be appreciated that the variable time epoch length can remove the need for studying multiple epoch lengths for best rule performance.

It will be appreciated that, although the various embodiments of the association process are primarily presented herein independently as being distinct embodiments, various embodiments of the association process presented herein may be used together in various combinations for various purposes.

FIG. 14 depicts one embodiment of a method for applying a set of problem prediction rules to predict problem events. The method 1400 of FIG. 14 may be executed by any device configured to apply a set of problem prediction rules to predict problem events (e.g., a problem prediction system, a network device, a customer device, or the like). The method 1400 of FIG. 14 may be used to provide block 220 of FIG. 2. It will be appreciated that, although primarily presented as being performed serially, at least a portion of the functions of method 1400 may be performed contemporaneously or in a different order than as presented in FIG. 14.

At block 1401, method 1400 begins.

At block 1410, problem prediction information is received.

The problem prediction information includes information configured for use by the device to predict problem events.

The problem prediction information includes a set of problem prediction rules to be applied by the device to predict problem events (e.g., problem events associated with that device, problem events associated with one or more other devices, or the like, as well as various combinations thereof).

The problem prediction information includes information indicative of a length of an observation window *W* to be used by the device when observing generated machine data (e.g., the length of the observation window *W* or information which may be used by the device to determine the length of the observation window *W*). The observation window *W,* or information indicative of the observation window *W,* may be different for different embodiments of the association process. The length of the observation window *W* may be based on a length of an analysis time period used to create at least one of the problem prediction rules based on analysis of historical problem data and historical machine data, which may be different for different embodiments of the association process. For example, the analysis time period may be a predictive time epoch *E* that is used as a look-back time interval from reference problem events (e.g., for problem prediction rules generated based on the first, second, third, or fourth embodiments of the association process). For example, the analysis time period may be a machine data range *R* used as look-ahead time interval that is advanced toward reference problem events (e.g., for problem prediction rules generated based on the fifth, sixth, seventh, or eighth embodiments of the association process).

The problem prediction information may include information indicative of a prediction time *P* within which a predicted problem event is predicted to occur (e.g., the prediction time *P* or information which may be used to determine the prediction time *P*). The prediction time *P* is the time window or length of time within which the predicted problem event is predicted to occur (e.g., matching of a rule pattern in the prediction window is a prediction that a problem will likely occur within prediction time *P*). The prediction time *P*, since it is the time window or length of time within which the predicted problem event is predicted to occur, also indicates the time window within which a proactive action may be taken (e.g., to prevent the predicted problem from occurring, to lessen the severity of the predicted problem if the predicted problem does in fact occur, or the like). The prediction time *P*, or information indicative of the prediction time *P*, may be different for different embodiments of the association process. For example, the prediction time *P* may be set by calculating the average time difference between the last machine data (e.g., problem indicator, such as an alarm or alert) in an epoch and the ticket time and setting prediction time *P* based on this value (e.g., for problem prediction rules generated based on the first, second, third, or fourth embodiments of the association process). For example, the prediction time *P* may be a predictive time epoch *E* that is used as a look-ahead time interval (in combination with a machine log range *R*) toward reference problem events (e.g., for problem prediction rules generated based on the fifth, sixth, seventh, and eighth embodiments of the association process).

The problem prediction information may include information indicative of a hold-off timer *H* which may be activated (e.g., the hold-off timer *H* or information which may be used to determine the hold-off timer *H*). The hold-off timer *H* may be activated to prevent duplicate predicted problem response actions from being initiated (e.g., preventing duplicate self-healing actions, duplicate notifications, or the like). The hold-off timer *H*, or information indicative of the hold-off timer *H*, may be different for different embodiments of the association process. For example, the hold-off timer *H* may be set to the predictive epoch length *E* (e.g., for problem prediction rules generated based on the first, second, third, or fourth embodiments of the association process). For example, the hold-off timer *H* may be set to the pattern check interval *C* (e.g., for problem prediction rules generated based on the fifth, sixth, seventh, and eighth embodiments of the association process).

The problem prediction information may be received in various ways. The problem prediction information may be received locally (e.g., from a local storage device) or may be received remotely (e.g., from a remote device via a communication network). For example, in the case in which the set of problem prediction rules is applied by a problem prediction system (e.g., PPS 140 of FIG. 1), the problem prediction information may be determined by the problem prediction system and, thus, may already be available in a storage device of the problem prediction system for use in predicting problem events. For example, in the case in which the set of problem prediction rules is applied by a device, such as a network device (e.g., an ND 112 of FIG. 1) or a customer device (e.g., a CD 120 of FIG. 1), the problem prediction information may be received locally from a storage of the device (e.g., where the problem prediction information may have already been provided from the problem prediction system to the device for use by the device in predicting problem events) or may be received remotely (e.g., from the problem prediction system or other suitable system or device via a communication network). It will be appreciated that the problem prediction information may be received in various other ways.

At block 1420, observed machine data is received. The observed machine data may include machine data generated within the observation window.

The observed machine data may be generated locally or remotely. For example, in the case in which the set of problem prediction rules is applied by a problem prediction system (e.g., PPS 140 of FIG. 1), the observed machine data may be received by the problem prediction system from various devices, which may include network devices (e.g., NDs 112 of FIG. 1), customer devices (e.g., CDs 120 of FIG. 1), or the like, as well as various combinations thereof. For example, in the case in which the set of problem prediction rules is applied by a device, such as a network device (e.g., an ND 112 of FIG. 1) or a customer device (e.g., a CD 120 of FIG. 1), the observed machine data may be received by the device locally in the sense that the observed machine data is generated at the device (e.g., received from one or more monitoring elements or other components of the device), may be received by the device remotely from one or more remote devices (e.g., a network device receiving machine data generated by customer devices served by the network device, a customer device receiving machine data generated by network devices serving the customer device, or the like), or the like, as well as various combinations thereof.

The observed machine data generated within the observation window, as indicated above, may be observed in real time or near real time. For example, the observed machine data generated within the observation window may be observed in real time or near real time where the set of problem prediction rules is being applied by a device for predicting problem events associated with the device and the machine data is available at the device as it is being generated. For example, the observed machine data generated within the observation window may be observed in near real time where the set of problem prediction rules is being applied by a device for predicting problem events associated with one or more other devices (e.g., by a problem prediction system for identifying predicted problem events associated with network devices and/or customer devices, by a network device for identifying predicted problem events associated with one or more customer devices, or the like) and, thus, at least a portion of the machine data needed by the device that is applying the problem prediction rules may need to be received from the one or more other devices for which the device is predicting problem events. It will be appreciated that the observation window may be a look-back from a current time, a look-back from a previous time, or the like.

The observed machine data generated within the observation window may be received in various other ways.

At block 1430, a predicted problem event is identified based on the problem prediction information and the observed machine data (which includes generated machine data falling within the observation window). The predicted problem event may be identified based on the set of problem prediction rules and based on the observed machine data.

The predicted problem event may be identified based on execution of a problem prediction process. The problem prediction process may compare the observed machine data to the problem prediction rules to determine whether the observed machine data matches any of the problem prediction rules. This may include a determination as to whether a pattern of observed machine data matches a pattern of reference machine data of a problem prediction rule. The pattern may be inclusion of common machine data, inclusion of common machine data including temporal associations between the machine data (e.g., machine logs having lengths of time therebetween or lengths of time therebetween that fall within a threshold), or the like. The problem prediction process may be further understood by way of reference to a simple example. For example, assume that the problem prediction rule is as follows: (Machine Data *1*, Machine Data *4*, Machine Data *6* → Problem Type *T*). In this example, if a first set of observed machine data includes [Machine Data *1*, Machine Data *3*, Machine Data *6*], then the observed machine data will not result in a match on the problem prediction rule. In this example, if a second set of observed machine data includes [Machine Data *1*, Machine Data *4*, Machine Data *6*], then the observed machine data will result in a match on the problem prediction rule and a problem type *T* will be predicted. In this example, if a third set of observed machine data includes [Machine Data *1*, Machine Data *2*, Machine Data *4*, Machine Data *6*, Machine Data *8*], then the observed machine data will result in a match on the problem prediction rule and a problem type *T* will be predicted". It will be appreciated that reference machine data of problem prediction rules may take various other forms and, thus, that the comparison of the observed machine data to the problem prediction rules in the problem prediction process may be performed in various other ways. An exemplary embodiment of use of a problem prediction process to identify a predicted problem event based on observed machine data and problem prediction rules is depicted with respect to FIG. 15.

The predicted problem event may be a prediction of a customer problem, a prediction of a customer ticket, a prediction of a customer outage, a prediction of a network problem, a prediction of a network ticket, a prediction of a network outage, or the like, as well as various combinations thereof.

At block 1499, method 1400 ends.

It will be appreciated that, although primarily presented with respect to an embodiment in which a predicted problem response action is not initiated based on the identification of the predicted problem event, in at least some embodiments a predicted problem response action is initiated based on the identification of the predicted problem event. The predicted problem response that is initiated may be identified from the problem prediction rule that was used to identify the predicted problem event (e.g., predictions of different predicted problem events based on different predicted problem event rules may result in initiation of different types of predicted problem response actions). The predicted problem response action may include one or more of performing a self-healing process locally, triggering a self-healing process to be performed at a remote device (e.g., a customer device where the predicted problem event is detected by a network device, a network device where the predicted problem event is detected by a customer device, a customer care center device, a call center device, or the like, as well as various combinations thereof), generating and propagating one or more notifications (e.g., from a customer device to a network device, from a network device to an upstream network device, from a customer device or a network device to an upstream network device, from a customer device or network device to an operations support system, from a customer device or a network device to a proactive care system, from a problem prediction system to an operations support system or a proactive care system, or the like, as well as various combinations thereof). The predicted problem response action may include initiating presentation of one or more messages or alerts to one or more users via one or more management systems, initiating delivery of one or more messages or alerts to one or more user devices of one or more users, or the like, as well as various combinations thereof. The predicted problem response action may include various other types of response actions, which may depend on various factors (e.g., the type of predicted problem event that is identified, the location at which the predicted problem event is identified (e.g., customer device, network device, management system, or the like), or the like, as well as various combinations thereof).

It will be appreciated that, although primarily presented with respect to an embodiment in which a predicted problem event is identified (for purposes of clarity), observed machine data may need to be evaluated over time before a predicted problem event is identified. It will be appreciated that, for a given set of observed machine data that is to be evaluated with respect to the set of problem prediction rules, method 1400 may be adapted to include a block in which a determination is made as to whether a predicted problem event is identified based on the given set of observed machine data and the set of problem prediction rules and either a predicted problem event is identified (and monitoring for predicted problem events continues) or a predicted problem event is not identified (and, again, monitoring for predicted problem events continues).

FIG. 15 depicts one embodiment of application of a problem prediction process to identify a predicted problem event based on observed machine data and problem prediction rules.

As depicted in FIG. 15, a problem prediction process 1510 has access to a set of problem prediction rules 1520, receives machine data 1530 that is generated in an observation window *W*, and compares the machine data 1530 that is generated in the observation window *W* with the problem prediction rules 1520 in order to identify a set of matched problem prediction rules 1540 (and, therefore, a set of predicted problem events indicated by the matched problem prediction rules).

As noted above, the problem prediction process 1510 operates based on the observation window *W* and, optionally, as discussed further below, also may operate based on one or more additional parameters (e.g., a prediction time *P*, a hold-off timer *H*, or the like, as well as various combinations thereof). It is noted that, as discussed further below, values of the operational parameters of the problem prediction process 1510 may be based on which embodiment of the association process is used to generate the set of problem prediction rules 1520 that is applied by the problem prediction process 1510).

The problem prediction process 1510 is configured to monitor machine data that is generated in observation window *W.* At any time *tᵢ,* the problem prediction process 1510 maintains a set of machine data generated in the time period (*tᵢ - W, tᵢ*)*.* This set of machine data is compared to the machine data patterns in the problem prediction rules. If the machine data pattern observed in the observation window *W* matches the machine data pattern of one of the problem prediction rules, the problem prediction rule is matched and, thus, the predicted problem event of the problem prediction rule is identified. The problem prediction process 1510, at the end of the current time period, advances to the next time period *tᵢ₊₁* = *tᵢ + Δt* (where *Δt* is the time increment) and considers only the machine data observed in the time period *(tᵢ₊₁ - W, tᵢ₊₁)* while also discarding older machine data that is outside of the new time period. In the first, second, third, and fourth embodiments of the association process, the observation window *W* for the problem prediction process 1510 may be set by calculating the maximum time difference between the machine data generated in an epoch and setting observation window *W* based on this value (e.g., setting *W* to the calculated value or to a value that is a function of the calculated value). In the fifth, sixth, seventh, and eighth embodiments of the association process, the observation window *W* for the problem prediction process 1510 may be set to the machine log range R. It will be appreciated that the observation window *W* for the problem prediction process 1510 may be set in other ways.

The problem prediction process 1510 may be configured to operate based on a prediction time parameter (e.g., prediction time *P* as discussed above). In at least some embodiments, the predicted problem event associated with the matched problem prediction rule may have a prediction time *P* associated therewith. The prediction time *P* is the time window or length of time within which the predicted problem event is predicted to occur (e.g., matching of a rule pattern in the prediction window is a prediction that a problem will likely occur within prediction time *P*). The prediction time *P*, since it is the time window or length of time within which the predicted problem event is predicted to occur, also indicates the time window within which a proactive action may be taken (e.g., to prevent the predicted problem from occurring, to lessen the severity of the predicted problem if the predicted problem does in fact occur, or the like). In the first, second, third, and fourth embodiments of the association process, the prediction time *P* for the problem prediction process 1510 may be set by calculating the average time difference between the last machine data (e.g., problem indicator, such as an alarm or alert) in an epoch and the ticket time and setting prediction time *P* based on this value (e.g., setting prediction time *P* to the calculated value or to a value that is a function of the calculated value). In the fifth, sixth, seventh, and eighth embodiments of the association process, the prediction time *P* for the problem prediction process 1510 may be set to the predictive epoch length *E*. It will be appreciated that the prediction time *P* for the problem prediction process 1510 may be set in other ways.

The problem prediction process 1510 may be configured to operate based on a hold-off time parameter (e.g., hold-off timer *H* as discussed above). In at least some embodiments, a hold-off timer *H* may be activated to prevent duplicate predicted problem response actions from being initiated (e.g., preventing duplicate self-healing actions, duplicate notifications, or the like). During the hold-off timer *H*, duplicate predicted problem response actions are to be prevented or suppressed from being initiated (e.g., from being activated locally, from being relayed as notifications, or the like). In the first, second, third, and fourth embodiments of the association process, the hold-off timer *H* for the problem prediction process 1510 may be set to the predictive epoch length *E*. In the fifth, sixth, seventh, and eighth embodiments of the association process, the hold-off timer *H* for the problem prediction process 1510 may be set to the pattern check interval *C*. It will be appreciated that the hold-off timer *H* for the problem prediction process 1510 may be set in other ways.

It will be appreciated that various other operational parameters may be used by the problem prediction process 1510 to identify predicted problem events based on observed machine data and problem prediction rules.

It will be appreciated that, although primarily presented herein with respect to embodiments in which problem prediction is provided within the context of a specific type of communications system and includes problem prediction for customer devices, in at least some embodiments problem prediction may be provided within the context of various other types of communication systems and may or may not include problem prediction for customer devices (e.g., predicting problems within a core wireless network or a wireless provider, predicting problems within an autonomous system (AS) of a service provider, predicting problems within an enterprise network, predicting problems within a datacenter network, or the like). Accordingly, it will be appreciated that various embodiments of the problem prediction capability presented herein may be adapted for predicting problems with various types of devices in various types of communication systems.

FIG. 16 depicts a high-level block diagram of a computer suitable for use in performing various functions described herein.

The computer 1600 includes a processor 1602 (e.g., a central processing unit (CPU), a processor having a set of processor cores, a processor core of a processor, or the like) and a memory 1604 (e.g., a random access memory (RAM), a read only memory (ROM), or the like), which are communicatively connected.

The computer 1600 also may include a cooperating element 1605. The cooperating element 1605 may be a hardware device. The cooperating element 1605 may be a process that can be loaded into the memory 1604 and executed by the processor 1602 to implement functions as discussed herein (in which case, for example, the cooperating element 1605 (including associated data structures) can be stored on a non-transitory computer-readable storage medium, such as a storage device or other storage element (e.g., a magnetic drive, an optical drive, or the like)).

The computer 1600 also may include one or more input/output devices 1606. The input/output devices 1606 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 1600 of FIG. 16 may represent a general architecture and functionality suitable for implementing functional elements described herein, portions of functional elements described herein, or the like, as well as various combinations thereof. For example, computer 1600 may provide a general architecture and functionality that is suitable for implementing one or more of an ND 112, a CD 120, an SS 130, PPS 140, a PPE 150, or the like.

It will be appreciated that the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits (ASIC), and/or any other hardware equivalents).

It will be appreciated that at least some of the functions discussed herein as software methods may be implemented within hardware, for example, as circuitry that cooperates with the processor to perform various functions. It will be appreciated that portions of functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable storage media), transmitted via a data stream in a broadcast or other signal bearing medium, and/or stored within a memory within a computing device operating according to the instructions.

It will be appreciated that the term "or" as used herein refers to a non-exclusive "or" unless otherwise indicated (e.g., use of "or else" or "or in the alternative").

## Claims

1. An apparatus, comprising: a processor (1602) and a memory (1604) communicatively connected to the processor (1602), the processor (1602) configured to: receive (1410) a set of problem prediction rules and information indicative of a length of an observation window (W) to be used by the apparatus when observing generated machine data, wherein the information indicative of the length of the observation window (W) is based on a length of an analysis time period used to create at least one of the problem prediction rules based on analysis of historical problem data and historical machine data; receive (1420) machine data generated by a device within the observation window (W); and identify (1430) a predicted problem event associated with the device based on a determination that the machine data matches one of the problem prediction rules.

2. The apparatus of claim 1, wherein the analysis time period comprises a predictive time epoch used as a look-back time interval from problem events or a machine data range used as look-ahead time interval that is advanced toward problem events.

3. The apparatus of claim 1, wherein the processor (1602) is configured to: receive information indicative of a length of a prediction time within which predicted problem events are predicted to occur.

4. The apparatus of claim 3, wherein the length of the prediction time is based on an average time difference, between a last machine data record in an epoch and a time of a reported problem event, observed during creation of at least one of the problem prediction rules.

5. The apparatus of claim 3, wherein the length of the prediction time is based on the length of the analysis time period, wherein the analysis time period comprises a predictive time epoch used as a look-back time interval from problem events.

6. The apparatus of claim 1, wherein the processor (1602) is configured to: receive information indicative of a length of a hold-off timer during which duplicate predicted problem response actions are to be prevented from being initiated.

7. The apparatus of claim 6, wherein the length of the hold-off timer is based on the length of the analysis time period, wherein the analysis time period comprises a predictive time epoch used as a look-back time interval from problem events.

8. The apparatus of claim 6, wherein the length of the hold-off timer is based on a length of a pattern check interval configured as a sliding window to check for duplicate patterns during creation of at least one of the problem prediction rules.

9. The apparatus according to any of the preceding claims, wherein the observation window (W), or information indicative of the observation window (W), is different for different embodiments of an association process for associating historical problem data and historical machine data.

10. The apparatus according to any of the preceding claims, wherein the analysis time period is a predictive time epoch (E) that is used as a look-back time interval from reference problem events.

11. A method, comprising: receiving (1410) a set of problem prediction rules and information indicative of a length of an observation window (W) to be used by the apparatus when observing generated machine data, wherein the information indicative of the length of the observation window (W) is based on a length of an analysis time period used to create at least one of the problem prediction rules based on analysis of historical problem data and historical machine data; receiving (1420) machine data generated by a device within the observation window (W); and identifying (1430) a predicted problem event associated with the device based on a determination that the machine data matches one of the problem prediction rules.

## Patentansprüche

1. Einrichtung, die einen Prozessor (1602) und einen Speicher (1604), der kommunikativ mit dem Prozessor (1602) verbunden ist, umfasst, wobei der Prozessor (1602) zu Folgendem ausgelegt ist: Empfangen (1410) eines Satzes von Problemvorhersageregeln und von Informationen, die eine Länge eines Beobachtungsfensters (W) anzeigen, das von der Einrichtung beim Beobachten von erzeugten Maschinendaten zu verwenden ist, wobei die Informationen, die die Längen des Beobachtungsfensters (W) anzeigen, auf einer Länge einer Analysezeitperiode basieren, die zum Erstellen von mindestens einer der Problemvorhersageregeln auf Basis einer Analyse von historischen Problemdaten und historischen Maschinendaten verwendet wird; Empfangen (1420) von Maschinendaten, die von einer Vorrichtung im Beobachtungsfenster (W) erzeugt werden; und Identifizieren (1430) eines vorhergesagten Problemereignisses, das mit der Vorrichtung verknüpft ist, auf Basis einer Bestimmung, dass die Maschinendaten mit einer der Problemvorhersageregeln übereinstimmen.

2. Einrichtung nach Anspruch 1, wobei die Analysezeitperiode eine prädikative Zeitepoche, die als ein Rückschauzeitintervall von Problemereignissen verwendet wird, oder einen Maschinendatenbereich umfasst, der als ein Vorausschauzeitintervall, das zu Problemereignissen vorgerückt ist, verwendet wird.

3. Einrichtung nach Anspruch 1, wobei der Prozessor (1602) zu Folgendem ausgelegt ist: Empfangen von Informationen, die eine Länge einer Vorhersagezeit anzeigen, innerhalb derer das Eintreten von vorhergesagten Problemereignissen vorhergesagt wird.

4. Einrichtung nach Anspruch 3, wobei die Länge der Vorhersagezeit auf einer durchschnittlichen Zeitdifferenz zwischen einem letzten Maschinendatensatz in einer Epoche und einer Zeit eines gemeldeten Problemereignisses, das während einer Erstellung von mindestens einer der Problemvorhersageregeln beobachtet wird, basiert.

5. Einrichtung nach Anspruch 3, wobei die Länge der Vorhersagezeit auf der Länge der Analysezeitperiode basiert, wobei die Analysezeitperiode eine prädikative Zeitepoche umfasst, die als ein Rückschauzeitintervall von Problemereignissen verwendet wird.

6. Einrichtung nach Anspruch 1, wobei der Prozessor (1602) zu Folgendem ausgelegt ist: Empfangen von Informationen, die eine Länge eines Rückhaltetimers anzeigen, während der verhindert wird, dass doppelte vorhergesagte Problemreaktionsaktionen initiiert werden.

7. Einrichtung nach Anspruch 6, wobei die Länge des Rückhaltetimers auf der Länge der Analysezeitperiode basiert, wobei die Analysezeitperiode eine prädikative Zeitepoche umfasst, die als ein Rückschauzeitintervall von Problemereignissen verwendet wird.

8. Einrichtung nach Anspruch 6, wobei die Länge des Rückhaltetimers auf einer Länge eines Musterprüfintervalls basiert, das als ein Gleitfenster zum Prüfen Doppelmuster während einer Erstellung von mindestens einer der Problemvorhersageregeln ausgelegt ist.

9. Einrichtung nach einem der vorhergehenden Ansprüche, wobei sich das Beobachtungsfenster (W) oder Informationen, die das Beobachtungsfenster (W) anzeigen, bei verschiedene Ausführungsformen eines Verknüpfungsprozesses zum Verknüpfen von historischen Problemdaten und historischen Maschinendaten unterscheiden.

10. Einrichtung nach einem der vorhergehenden Ansprüche, wobei die Analysezeitperiode eine prädikative Zeitepoche (E) ist, die als ein Rückschauzeitintervall von Referenzproblemereignissen verwendet wird.

11. Verfahren, das Folgendes umfasst: Empfangen (1410) eines Satzes von Problemvorhersageregeln und von Informationen, die eine Länge eines Beobachtungsfensters (W) anzeigen, das von der Einrichtung beim Beobachten von erzeugten Maschinendaten zu verwenden ist, wobei die Informationen, die die Längen des Beobachtungsfensters (W) anzeigen, auf einer Länge einer Analysezeitperiode basieren, die zum Erstellen von mindestens einer der Problemvorhersageregeln auf Basis einer Analyse von historischen Problemdaten und historischen Maschinendaten verwendet wird; Empfangen (1420) von Maschinendaten, die von einer Vorrichtung im Beobachtungsfenster (W) erzeugt werden; und Identifizieren (1430) eines vorhergesagten Problemereignisses, das mit der Vorrichtung verknüpft ist, auf Basis einer Bestimmung, dass die Maschinendaten mit einer der Problemvorhersageregeln übereinstimmen.

## Revendications

1. Appareil, comprenant : un processeur (1602) et une mémoire (1604) connectée de manière communicative au processeur (1602), le processeur (1602) étant configuré pour : recevoir (1410) un ensemble de règles de prédiction de problèmes et des informations indicatives d'une durée d'une fenêtre d'observation (W) à utiliser par l'appareil lors de l'observation de données machine générées, dans lequel les informations indicatives de la durée de la fenêtre d'observation (W) sont basées sur une durée d'une période de temps d'analyse utilisée pour créer au moins une des règles de prédiction de problèmes sur la base de l'analyse de données de problèmes historiques et de données machine historiques ; recevoir (1420) des données machine générées par un dispositif dans la fenêtre d'observation (W) ; et identifier (1430) un événement de problème prédit associé au dispositif lorsqu'il est déterminé que les données machine concordent avec l'une des règles de prédiction de problèmes.

2. Appareil de la revendication 1, dans lequel la période de temps d'analyse comprend une époque temporelle prédictive utilisée comme intervalle de temps de rétrospection par rapport à des événements de problèmes, ou une plage de données machine utilisée comme intervalle de temps d'anticipation qui est avancé par rapport aux événements de problèmes.

3. Appareil de la revendication 1, dans lequel le processeur (1602) est configuré pour : recevoir des informations indicatives d'une durée d'un temps de prédiction au cours duquel on prédit que des événements de problèmes prédits vont se produire.

4. Appareil de la revendication 3, dans lequel la durée du temps de prédiction est basée sur une différence de temps moyenne entre un dernier enregistrement de données machine d'une époque et un temps d'un événement de problème signalé observé lors de la création d'au moins une des règles de prédiction de problèmes.

5. Appareil de la revendication 3, dans lequel la durée du temps de prédiction est basée sur la durée de la période de temps d'analyse, dans lequel la période de temps d'analyse comprend une époque temporelle prédictive utilisée comme intervalle de temps de rétrospection par rapport à des événements de problèmes.

6. Appareil de la revendication 1, dans lequel le processeur (1602) est configuré pour : recevoir des informations indicatives d'une durée d'une temporisation de suspension au cours de laquelle il faut empêcher l'initiation d'actions de réponse aux problèmes prédits en double.

7. Appareil de la revendication 6, dans lequel la durée de la temporisation de suspension est basée sur la durée de la période de temps d'analyse, dans lequel la période de temps d'analyse comprend une époque temporelle prédictive utilisée comme intervalle de temps de rétrospection par rapport à des événements de problèmes.

8. Appareil de la revendication 6, dans lequel la durée de la temporisation de suspension est basée sur une durée d'un intervalle de vérification de motif configuré sous la forme d'une fenêtre glissante pour vérifier les motifs en double lors de la création d'au moins une des règles de prédiction de problèmes.

9. Appareil selon l'une des revendications précédentes, dans lequel la fenêtre d'observation (W) ou les informations indicatives de la fenêtre d'observation (W) diffèrent dans les différents modes de réalisation d'un processus d'association pour associer des données de problèmes historiques et des données machine historiques.

10. Appareil selon l'une des revendications précédentes, dans lequel la période de temps d'analyse est une époque temporelle prédictive (E) qui est utilisée comme intervalle de temps de rétrospection à partir d'événements de problèmes de référence.

11. Procédé, comprenant les étapes suivantes : recevoir (1410) un ensemble de règles de prédiction de problèmes et des informations indicatives d'une durée d'une fenêtre d'observation (W) à utiliser par l'appareil lors de l'observation de données machine générées, dans lequel les informations indicatives de la durée de la fenêtre d'observation (W) sont basées sur une durée d'une période de temps d'analyse utilisée pour créer au moins une des règles de prédiction de problèmes sur la base de l'analyse de données de problèmes historiques et de données machine historiques ; recevoir (1420) des données machine générées par un dispositif dans la fenêtre d'observation (W) ; et identifier (1430) un événement de problème prédit associé au dispositif lorsqu'il est déterminé que les données machine concordent avec l'une des règles de prédiction de problèmes.
